# EUROPEAN PATENT SPECIFICATION

(11) **EP 3 524 401 B1**
(45) Date of publication and mention of the grant of the patent: **09.12.2020**
(21) Application number: 19153880.0
(22) Date of filing: 28.01.2019
(51) Int. Cl.: B29C 45/17, B29C 45/54

(54) **INJECTION UNIT**
INJEKTIONSEINHEIT
UNITÉ D'INJECTION

(30) Priority: 31.01.2018 JP 2018016003
(43) Date of publication of application: 14.08.2019
(73) Proprietor: Sumitomo Heavy Industries, Ltd., Tokyo 141-6025 (JP)
(72) Inventor: TAKEUCHI, Shigeru, Chiba-shi, Chiba 263-0001 (JP)
(74) Representative: Louis Pöhlau Lohrentz

(56) References cited:
- EP-A1- 2 907 645
- JP-A- H0 663 991
- JP-A- 2017 148 956
- JP-U- H04 111 414

## Description

### BACKGROUND OF THE INVENTION

### Field of the Invention

Certain embodiments of the present invention relate to an injection unit.

### Description of Related Art

In the related art, in a preplasticizing type injection unit which separately includes a plasticizing unit having a plasticizing cylinder and an extrusion unit having an injection cylinder, an injection molding of feeding a resin melted in the plasticizing cylinder to the injection cylinder, feeding the resin supplied to the injection cylinder to a nozzle, and injecting the resin to a mold via a nozzle is performed (for example, JP 2009 190203 A).

In the preplasticizing type injection unit, in general, switching of a flow path of a resin between the supply of the resin from the plasticizing cylinder to the injection cylinder and the injection of the resin from the injection cylinder to the mold via the nozzle is performed by using a switching valve. The switching valve includes a valve box and a valve body which has a plurality of flow paths disposed in a hollow portion of the valve box. In order to rotate or slide the valve body in the hollow portion of the valve box, a slight clearance is provided between the hollow portion and the valve body. A resin discharge flow path communicating with the hollow portion is provided in the valve box, the resin which has flowed into the clearance flows downward via the resin discharge flow path, and the resin continuously flows to the outside of the valve box via a resin outlet of the resin discharge flow path facing an outer peripheral surface of the valve box. JP 2017 148956 A and EP 2 907 645 A1 disclose an injection unit comprising a plasticizing cylinder, an injection cylinder, a nozzle and a valve box with a switching valve in-between the plasticizing cylinder and the injection cylinder and the nozzle, the valve box having a hollow portion and a valve body which is disposed in the hollow portion. JP 2017 148956 A further discloses a resin discharge flow path formed in the valve box which communicates with the hollow portion and a resin outlet through which the discharged resin flows.

### SUMMARY OF THE INVENTION

However, a leaking resin which is melted and discharged to the outside of the injection unit is cooled and hardened by an outside air, and there is a possibility that the resin is fixed to the outer peripheral surface of the valve box forming the switching valve or the like. In a case where the resin is fixed to the outer peripheral surface of the valve box or the like, the leaking resin is further supplied to the inside of the fixed resin, the fixed resin is grown, and a volume is likely to increase. In addition, while not noticed by an operator, the grown resin may come into contact with a heater or the like mounted on a periphery of the injection cylinder or the like, which may cause smoking, carbonization, short circuit of the heater, or the like.

The present invention is made in consideration of the above-described problems, and an object thereof is to provide an injection unit capable of preventing a resin discharged from the switching valve to the outside of the injection unit from being grown in a state of being fixed to the outer peripheral surface of the valve box or the like.

In order to achieve the above-described object, according to an aspect of the present invention, there is provided an injection unit including: a plasticizing unit which includes a plasticizing cylinder; an extrusion unit which includes an injection cylinder; a nozzle; and a switching valve which performs switching a flow direction of a molding material among the plasticizing cylinder, the injection cylinder, and the nozzle, in which the switching valve includes a valve box having a hollow portion and a valve body which is rotatably or slidably disposed in the hollow portion, the hollow portion, a resin discharge flow path which communicates with the hollow portion, and a resin outlet through which the resin discharge flow path faces an outer peripheral surface of the valve box are formed in the valve box, wherein a clearance is formed between the wall surface of the hollow portion and the outer peripheral surface of the valve body, and the resin is discharged from the resin outlets facing the lower surface of the valve box via the resin discharge flow paths communicating with the clearance, and a resin removal portion which removes a resin discharged from the resin outlet is provided at a position corresponding to at least the resin outlet.

According to the aspect of the present invention, it is possible to prevent a resin discharged from the switching valve to the outside of the injection unit from being grown in a state of being fixed to the outer peripheral surface of the valve box or the like.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a side view of an injection unit according to an embodiment of the present invention.
Fig. 4 is a view showing a first state of a valve body of a switching valve forming the injection unit.
Fig. 5 is a view showing a second state of the valve body of the switching valve forming the injection unit.
Fig. 6 is a sectional view when the switching valve is cut in a direction perpendicular to Figs. 4 and 5.
Fig. 7 is a sequence diagram of a molding cycle in a preplasticizing type injection unit.
Fig. 8 is an exterior perspective view of an injection unit according to a first embodiment.
Fig. 9 is an exterior perspective view of an injection unit according to a second embodiment.
Fig. 10 is an exterior perspective view of an injection unit according to a third embodiment.

### DETAILED DESCRIPTION OF THE INVENTION

Hereinafter, an injection unit according to an embodiment will described with reference to the drawings. In addition, in the present specification and drawings, the same reference numerals are assigned to substantially the same components, and overlapping descriptions thereof are omitted.

### [Injection Molding Machine According to Embodiment]

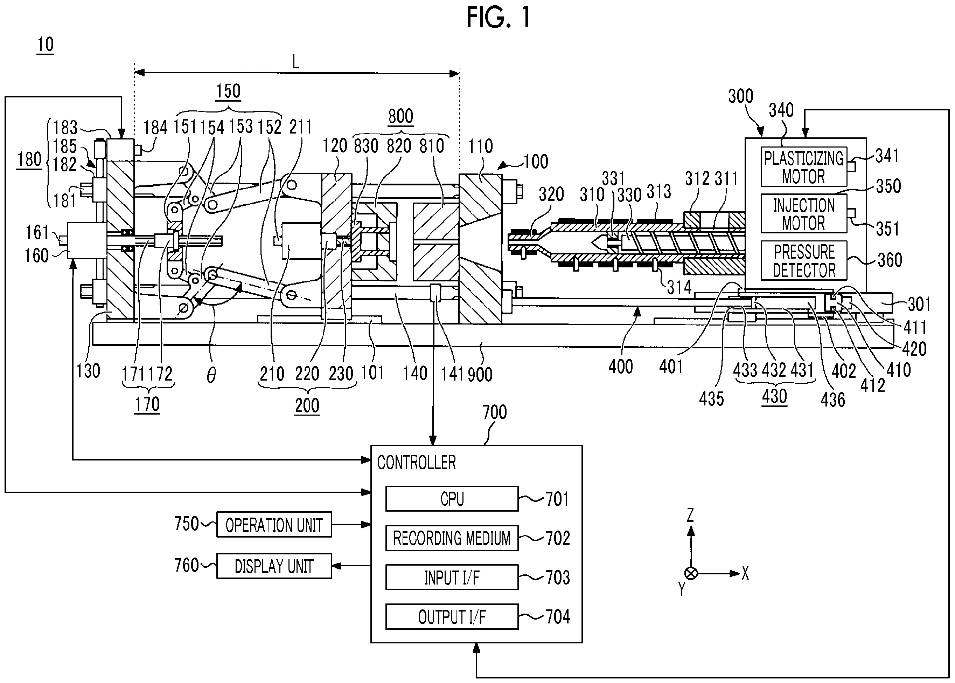

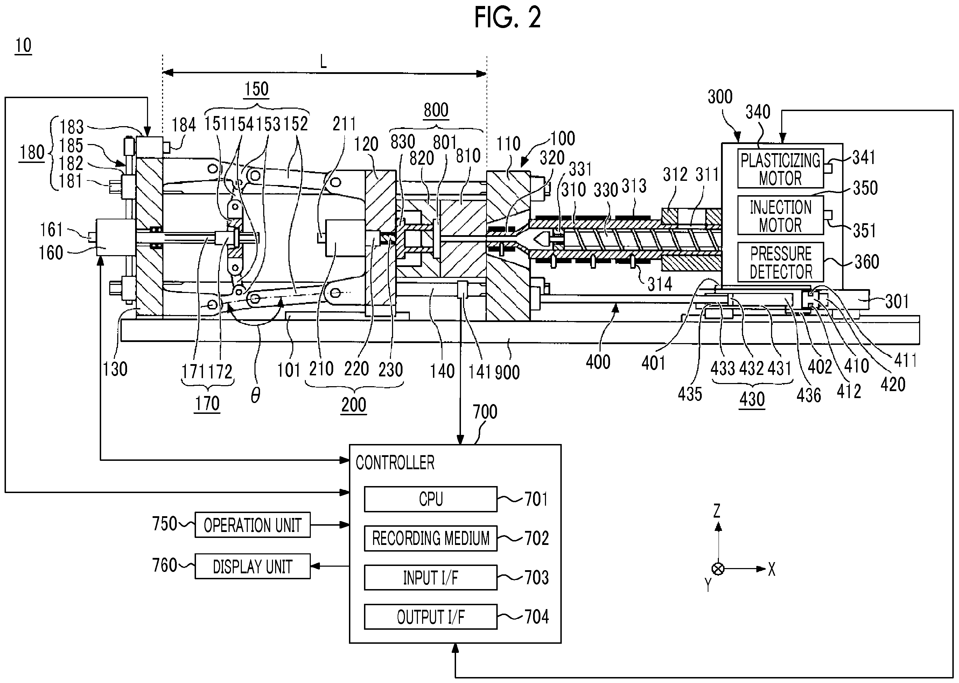

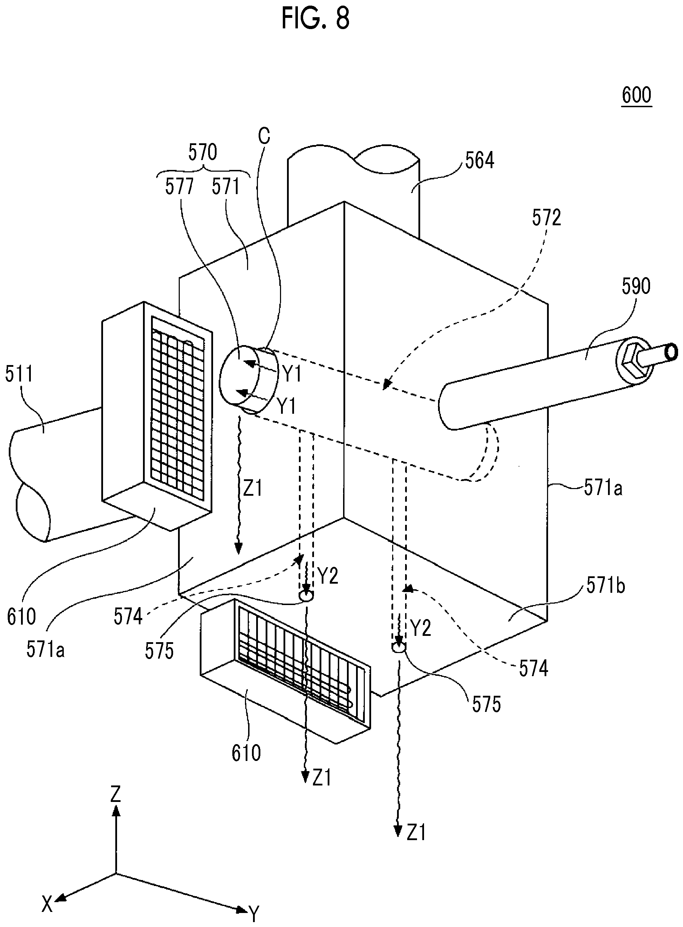

First, a schematic configuration of the entire injection molding machine on which an injection unit according to each embodiment is mounted will be described with reference to Figs. 1 and 2. Specifically, an injection molding machine shown in Figs. 1 and 2 is an inline type injection molding machine, an injection unit according to each embodiment of the present invention shown in Fig. 8 or the like is preplasticizing type injection unit. However, the injection unit according to each embodiment of the present invention can be applied to an injection unit of the inline type injection molding machine shown in Figs. 1 and 2. That is, according to this application, a preplasticizing type injection molding machine having the injection unit according to each embodiment of the present invention can be obtained. In addition, in Figs. 1 and 2, an X direction, a Y direction, and a Z direction are directions perpendicular to each other. Specifically, the X direction and the Y direction are a horizontal direction, and the Z direction is a vertical direction. In addition, the X direction is the same as movement directions of a movable platen 120 or an injection unit 300 or mold opening and closing directions in an injection molding machine 10, and the Y direction is a width direction of the injection molding machine 10. In addition, in a case where a mold clamping unit 100 is a horizontal type mold clamping unit, the X direction is the mold opening and closing directions, and the Y direction is the width direction of the injection molding machine 10.

### (Injection Molding Machine)

Fig. 1 is a view showing a state when a mold opening of an injection molding machine according an embodiment is completed, and Fig. 2 is a view showing a state when a mold of the injection molding machine according to the embodiment is clamped. As shown in Figs. 1 and 2, the injection molding machines 10 include the mold clamping unit 100, an ejector unit 200, an injection unit 300, a movement unit 400, a controller 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is open is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected to the stationary platen 110 with a gap, and is placed on the frame 900 to be movable in mold opening and closing directions . In addition, the toggle support 130 may be movable along a guide which is placed on the frame 900. Moreover, the guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. Aplurality of (for example, four) tie bars 140 may be used. The tie bars 140 are parallel to each other in the mold opening and closing directions and extend according to a mold clamping force. A tie bar strain detector 141 which detects strain of the tie bar 140 maybe provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be coupled to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the controller 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. In the mold closing process, the movable platen 120 is moved to the position at which the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. In the mold clamping process, the movable platen 120 is moved (pressurized) from the position at which the movable mold 820 and the stationary mold 810 come into contact with each other to a position at which a predetermined mold clamping force is generated, and the generated mold clamping force is maintained. In addition, the position at which the pressurization starts maybe set to a position slightly before the movable mold 820 and the stationary mold 810 come into contact with each other. Here, when the mold is clamped, a cavity space 801 is formed between the movable mold 820 and the stationary mold 810, and the cavity space 801 is filled with a liquid molding material by the injection unit 300. The filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, a speed or positions (including mold opening/closing start position, speed switching position, mold closing completion position, and mold clamping position) of the crosshead 151 and the mold clamping force in the mold closing process and the mold clamping process are collectively set as a series of setting conditions. The mold opening/closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position maybe the same as the mold clamping position . In addition, the mold opening completion position and the mold opening/closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead 151 or the position of the movable platen 120, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably supported by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, other fixed states may be applied.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 maybe fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 maybe used, and a plurality of mold space adjustment motor 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, other configurations may be applied.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. In addition, the tie bar temperature controller may include a cooler such as a water cooling jacket and may control the temperature of the tie bar 140 by cooling. Moreover, the tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are up-down directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The mold unit includes the lower mold and the upper mold. The lower mold may be attached to the lower platen via a rotary table. The toggle support is disposed below the lower platen and is connected to the upper platen via the tie bars. The upper platen and the toggle support are connected to each other with a gap in mold opening and closing directions by the tie bars. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The controller 700 controls the heating unit 313 such that a detection temperature of the temperature detector 314 for each zone becomes a set temperature.

The nozzle 320 is provided on the front end portion of the cylinder 310 and presses the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a portion in front of the screw 330 and is accumulated in front of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the portion in front of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the controller 700. The pressure detector 360 is provided in a transmission path of the force between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a filling process, a holding pressure process, a plasticizing process, or the like under the control of the controller 700.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

Moreover, in the filling process, after the position of the screw 330 reaches the set position, the screw 330 may temporarily stop at the set position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw speed detector which detects the speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In the plasticizing process, the plasticizing motor 340 is driven to rotate the screw 330 at a set rotating speed and the molding material is fed forward along the spiral grooves of the screw 330 by the screw 330. According to this, the molding material is gradually melted. The screw 330 moves rearward as the liquid molding material is fed to the portion in front of the screw 330 and is accumulated in front of the cylinder 310. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

In addition, the injection unit 300 of the present embodiment is an inline type injection unit. However, the injection unit 300 may be applied to a preplasticizing type injection unit described later. The preplasticizing type injection unit supplies a melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder. Inaddition, the plasticizing type injection unit will be described in detail later.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly performs the mold closing process, the mold clamping process, the mold opening process, or the like to repeatedly manufacture the molding product. In addition, the controller 700 performs the plasticizing process, the filling process, the holding pressure process, or the like during the mold clamping process. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once molding cycle includes the plasticizing process, the mold closing process, the molding clamping process, the filling process, the holding pressure process, the cooling process, the mold opening process, and the ejection process in this order. Here, this order is an order of the start of each process. In the filling process, the holding pressure process, and the cooling process are performed between the start of the mold clamping process to the end of the mold clamping process . The end of the mold clamping process coincides with the start of the mold opening process. In addition, in order to shorten the molding cycle time, the plurality of processes may be simultaneously performed. For example, the plasticizing process may be performed of the cooling process of the previous molding cycle, and in this case, the molding closing process may be performed at the final stage of the molding cycle. In addition, the filling process may start during the molding closing process. Moreover, the ejection process may be started during the mold opening process. In a case where an on/off valve which opens and closes the flow path of the nozzle 320 is provided, the mold opening process may be started during the plasticizing process. Accordingly, even when the molding opening process starts during the plasticizing process, if the on-off valve closes the flow path of the nozzle 320, the molding material does not leak from the nozzle 320.

The controller 700 is connected to an operation unit 750 or the display unit 760. The operation unit 750 receives an input operation from a user and outputs a signal corresponding to the input operation to the controller 700. The display unit 760 displays an operation screen corresponding to the input operation of the operation unit 750 under the control of the controller 700.

The operation screen is used for the setting of the injection molding machine 10 or the like. A plurality of operation screens are provided, and thus, are displayed to be switched or to overlap each other. A user operates the operation unit 750 while viewing the operation screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided.

### [Injection Unit According to Embodiment]

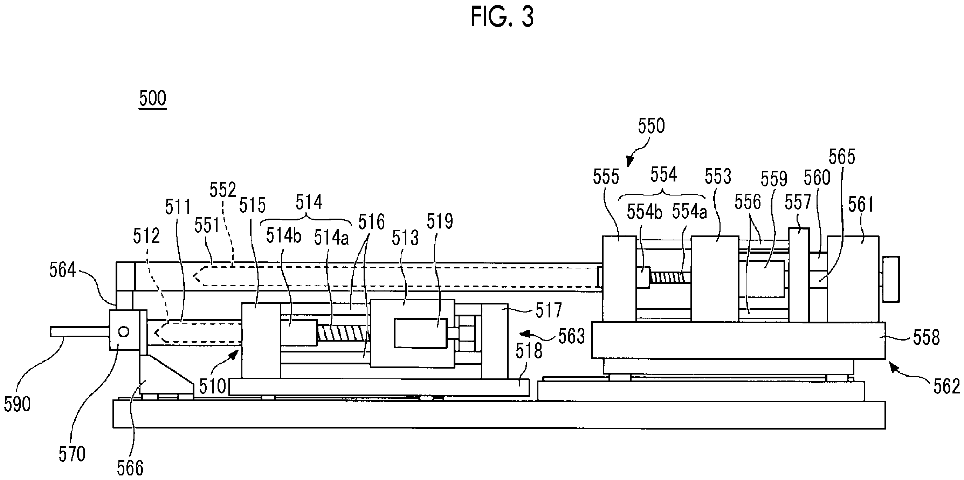

Next, an injection unit according to an embodiment of the present invention constituting the preplasticizing type injection molding machine in place of the injection unit 300 of the inline type injection molding machine 10 shown in Figs. 1 and 2 will be described with reference to Fig. 3. Fig. 3 is a side view of the injection unit according to the embodiment of the present invention. An injection unit 500 includes an extrusion unit 510, a plasticizing unit 550, a nozzle 590, and a switching valve 570 which connects the units to each other. The plasticizing unit 550 includes a plasticizing cylinder 551 which heats the molding material and supplies the liquid molding material to the extrusion unit 510. The extrusion unit 510 includes an injection cylinder 511 which heats the molding material supplied from the plasticizing unit 550, and an inside of the mold unit is filled with the molding material from a nozzle disposed on a front end portion of the injection cylinder 511 by the extrusion unit 510. Hereinafter, each component of the injection unit 500 will be described.

### (Screw Unit)

First, a plasticizing unit 550 will be described. The plasticizing unit 550 includes the plasticizing cylinder 551, a screw 552, a pressure plate 553, a ball screw mechanism 554, an extrusion support 555, guide bars 556, a guide bar support 557, a base 558, an extrusion motor 559, and a plasticizing motor 560.

The plasticizing cylinder 551 is a heating cylinder which heats the molding material. The plasticizing cylinder 551 is horizontally disposed. A heater is attached to an outer periphery of the plasticizing cylinder 551 as a heat source. A temperature sensor is embedded in the plasticizing cylinder 551, a measurement signal measured by the temperature sensor is transmitted to the controller 700, and the controller 700 controls an output of the heater based on the measurement signal measured by the temperature sensor.

The screw 552 is feeding-out member which melts the molding material in the plasticizing cylinder 551 while kneading the molding material and feeds to the front side. The screw 552 is disposed to be movable forward or rearward and rotatable in the plasticizing cylinder 551.

The pressure plate 553 is a movable member which is moves forward together with the screw 552 and presses the screw 552 from the rear side. The pressure plate 553 is held via a bearing which rotatably supports a drive shaft (not shown) which is coaxially connected to the screw 552. The drive shaft is spline-coupled to a rotary shaft 565, rotates together with the rotary shaft 565, and moves forward or rearward with respect to the rotary shaft 565. The rotary shaft 565 is connected to the plasticizing motor 560 via a speed reducer 561 or the like. The plasticizing motor 560 is driven to rotate the rotary shaft 565, and thus, the screw 552 is rotated.

The ball screw mechanism 554 is a motion conversion unit which converts a rotary motion generated by the extrusion motor 559 into a linear motion and transmits a force generated by the linear motion to the pressure plate 553. The ball screw mechanism 554 is disposed to be parallel to a center line of the screw 552. A plurality of ball screw mechanisms 554 are provided according to a plurality of extrusion motors 559.

The plurality of ball screw mechanisms 554 may symmetrically be disposed about the center line of the screw 552. According to this configuration, the plurality of ball screw mechanisms 554 are simultaneously operated, and thus, when the pressure plate 553 is moved forward, it is possible to straightly press the screw 552.

Each ball screw mechanism 554 may be disposed as close as possible to the center line of the screw 552. An input location and an output location of a forward force in the pressure plate 553 are close to each other, and thus, it is possible to suppress deflection of the pressure plate 553.

Each ball screw mechanism 554 includes a ball screw shaft 554a and a ball screw nut 554b which is screwed to the ball screw shaft 554a. The ball screw shaft 554a is attached to the pressure plate 553 to be rotatable with respect to the pressure plate 553 and to be unmovable forward or rearward relative to the pressure plate 553. The pressure plate 553 may hold the ball screw shaft 554a via a bearing which rotatably supports the ball screw shaft 554a. Meanwhile, the ball screw nut 554b is attached to the extrusion support 555 to be non-rotatable with respect to the extrusion support 555 and to be unmovable forward or rearward with respect to the extrusion support 555.

The extrusion motor 559 is attached to the pressure plate 553 and is coaxially connected to the ball screw shaft 554a. If the extrusion motor 559 is driven and the ball screw shaft 554a moves forward or rearward while being rotated, the screw 552 moves forward or rearward together with the pressure plate 553. In addition, the rotation of the extrusion motor 559 may be transmitted to the ball screw shaft 554a via a belt, a pulley, or the like.

The extrusion support 555 is an attachment member to which the plasticizing cylinder 551 and the ball screw mechanism 554 are attached. The extrusion support 555 is fixed to the base 558. The guide bar support 557 is also fixed to the base 558. The guide bars 556 are installed between the extrusion support 555 and the guide bar support 557.

The guide bars 556 are guides which guide the pressure plate 553 forward or rearward. A plurality of guide holes are formed in the pressure plate 553 and the guide bar 556 is inserted into each guide hole. A diameter of each guide hole is set to be slightly larger than a diameter of each guide bar 556 such that the guide bar 556 can be inserted into the guide hole.

As shown in Fig. 3, when viewed in a lateral direction, the ball screw mechanism 554 may be positioned between the plurality of guide bars 556. Here, the lateral direction is a direction perpendicular to a front-rear direction and the up-down direction. The lateral direction is a direction in which the plurality of ball screw mechanisms 554 are arranged. When viewed in the lateral direction, the guide bars 556 are positioned outside the ball screw mechanism 554, and thus, a gap in the up-down direction between the guide bars 556 is widened. Accordingly, a gap between supporting points of the pressure plate 553 by the plurality of guide bars 556 is widened in the up-down direction . Accordingly, when viewed in the lateral direction, an inclination of the pressure plate 553 can be suppressed, and thus, straightness of the pressure plate 553 can be improved. In addition, in order to dispose the ball screw mechanism 554 as close as possible to the center line of the screw 552 as described above, preferably, the guide bars 556 may be positioned outside the ball screw mechanism 554.

An extrusion frame 562 includes the extrusion support 555, the guide bars 556, the guide bar support 557, and the base 558. A rotary shaft which is parallel in the up-down direction is provided in the base 558. In addition, the screw 552 can be replaced by rotating the plasticizing cylinder 551. However, the mold clamping unit exists in front of the plasticizing cylinder 551, and thus, it is difficult to secure a work space for replacing the screw 552. Accordingly, it is possible to replace the screw 552 by rotating the extrusion frame 562 about the rotary shaft parallel in the up-down direction in the base 558 so as to rotate the plasticizing cylinder 551.

If the screw 552 is rotated by driving the plasticizing motor 560, the molding material is fed forward along spiral grooves formed on the screw 552. The molding material is gradually melted while moving forward in the plasticizing cylinder 551. The liquid molding material is fed to a portion in front of the screw 552 and is accumulated in the front portion of the plasticizing cylinder 551, and thus, the screw 552 moves rearward.

If the extrusion motor 559 is driven to move the screw 552 forward, the molding material accumulated in front of the screw 552 is supplied from the plasticizing cylinder 551 to the injection cylinder 511. As the molding material is accumulated in front of a plunger 512, the plunger 512 moves rearward. Both the plasticizing cylinder 551 and the ball screw mechanism 554 may be attached to the extrusion support 555.

The extrusion support 555 includes a refrigerant flow path (not shown) which is a heat insulating portion for blocking heat transfer between the plasticizing cylinder 551 and the ball screw mechanism 554. The refrigerant flow path is provided in a middle of the heat transfer path and suppresses an increase in a temperature of the ball screw mechanism 554. By suppressing the increase in the temperature, it is possible to prevent the lubricant from flowing out from the ball screw mechanism 554 via a clearance caused by a difference in thermal deformation between the ball screw shaft 554a and the ball screw nut 554b. In addition, it is possible to suppress a dimensional change of a component of the ball screw mechanism 554. Accordingly, a smooth operation of the ball screw mechanism 554 is realized, and thus, it is possible to decrease an amount of the used lubricant. Moreover, as described above, in the case where the ball screw mechanism 554 is disposed as close as possible to the center line of the screw 552, a heat transfer path between the ball screw mechanism 554 and the plasticizing cylinder 551 is shortened, and thus, excellent heat insulation properties are exerted by the refrigerant flow path in the middle of the heat transfer path. In addition, a cooling unit (not shown) is connected to the refrigerant flow path.

The cooling unit is controlled by the controller 700 so as to supply a refrigerant to the refrigerant flow path. The refrigerant includes a liquid such as water or a gas such as air. For example, the cooling unit includes a heat exchanger, a pump, or the like, and a refrigerant may circulate between the heat exchanger and the refrigerant flow path. In addition, the cooling unit may not include the heat exchanger, and the refrigerant warmed in the refrigerant flow path may be discarded.

The controller 700 causes the temperature sensor to monitor at least one of the temperature of the ball screw mechanism 554, the temperature of the plasticizing cylinder 551, and the temperature of the extrusion support 555, and controls the cooling unit based on measurement results of the temperature sensor. In addition, a flow rate of the refrigerant supplied from the cooling unit, a temperature of the refrigerant, or the like is controlled by the controller 700. The flow rate of the refrigerant or the temperature of the refrigerant can be adjusted such that the temperature of the extrusion support 555 is within a predetermined range, overcooling of the extrusion support 555 is restricted by this control, and it is possible to improve heating efficiency of the plasticizing cylinder 551.

In addition, in a case where the temperature of the extrusion support 555 exceeds an upper limit temperature, an alarm unit (not shown) can be operated by the controller 700, and thus, it is possible to restrict heating of the plasticizing cylinder 551. In addition, in a case where the temperature of the extrusion support 555 is below a lower limit temperature, the alarm unit can be operated by the controller 700, and thus, it is possible to restrict the cooling of the extrusion support 555.

### (Extrusion Unit)

Next, the extrusion unit 510 will be described. The extrusion unit 510 includes the injection cylinder 511, the plunger 512, a pressure plate 513, a ball screw mechanism 514, an injection support 515, guide bars 516, a guide bar support 517, a base 518, and an injection motor 519.

The injection cylinder 511 is a cylinder which accommodates and accumulates the injected molding material. A heating unit such as a heater is attached to an outer periphery of the injection cylinder 511 as a heat source. A temperature sensor is embedded in the injection cylinder 511, a measurement signal measured by the temperature sensor is transmitted to the controller 700, and the controller 700 controls an output of the heater based on the measurement signal measured by the temperature sensor.

The injection cylinder 511 may be disposed to be parallel to the plasticizing cylinder 551 and maybe disposed horizontally. The plasticizing cylinder 551 is longer than the injection cylinder 511 and may be disposed above the injection cylinder 511. The injection cylinder 511 is connected to the plasticizing cylinder 551 via a connection pipe 564 and a switching valve 570, and accommodates and accumulates the molding material supplied from the plasticizing cylinder 551 to the switching valve 570.

The plunger 512 is disposed to be movable forward or rearward in the injection cylinder 511. The pressure plate 513 is a movable member which moves forward or rearward along with the plunger 512.

The ball screw mechanism 514 is a motion conversion unit which converts a rotary motion generated by the injection motor 519 into a linear motion and transmits a force generated by the linear motion to the pressure plate 513. The ball screw mechanism 514 is disposed to be parallel to a center line of the plunger 512. A plurality of ball screw mechanisms 514 are provided according to a plurality of injection motors 519.

The plurality of ball screw mechanisms 514 may symmetrically be disposed about the center line of the plunger 512. According to this configuration, the plurality of ball screw mechanisms 514 are simultaneously operated, and thus, when the pressure plate 513 is moved forward, it is possible to straightly press the plunger 512.

Each ball screw mechanism 514 may be disposed as close as possible to the center line of the plunger 512. An input location and an output location of a forward force in the pressure plate 513 are close to each other, and thus, it is possible to suppress deflection of the pressure plate 513.

Each ball screw mechanism 514 includes a ball screw shaft 514a and a ball screw nut 514b which is screwed to the ball screw shaft 514a. The ball screw shaft 514a is attached to the pressure plate 513 to be rotatable with respect to the pressure plate 513 and to be unmovable forward or rearward relative to the pressure plate 513. The pressure plate 513 may hold the ball screw shaft 514a via a bearing which rotatably supports the ball screw shaft 514a. Meanwhile, the ball screw nut 514b is attached to the injection support 515 to be non-rotatable with respect to the injection support 515 and to be unmovable forward or rearward with respect to the injection support 515.

The injection motor 519 is attached to the pressure plate 513 and is connected to an output shaft of the injection motor 519 via a belt, a pulley, or the like. If the injection motor 519 is driven and the ball screw shaft 514a moves forward or rearward while being rotated, the plunger 512 moves forward or rearward together with the pressure plate 513. In addition, the rotation of the injection motor 519 may be coaxially connected to the ball screw shaft 514a.

The injection support 515 is an attachment member to which the injection cylinder 511 and the ball screw mechanism 514 are attached. The injection support 515 is fixed to the base 518. The guide bar support 517 is also fixed to the base 518. The guide bars 516 are installed between the injection support 515 and the guide bar support 517.

The guide bars 516 are guides which guide the pressure plate 513 forward or rearward. A plurality of guide holes are formed in the pressure plate 513 and the guide bar 516 is inserted into each guide hole. A diameter of each guide hole is larger than a diameter of each guide bar 516, and thus, the pressure plate 513 can be inclined.

Accordingly, when viewed in a lateral direction, as shown in Fig. 3, the ball screw mechanism 514 may be positioned between the plurality of guide bars 516. Here, the lateral direction is a direction perpendicular to a front-rear direction and the up-down direction and a direction in which the plurality of ball screw mechanisms 514 are arranged.

When viewed in the lateral direction, the guide bars 516 are positioned outside the ball screw mechanism 514, and thus, a gap in the up-down direction between the guide bars 516 is widened. Accordingly, a gap between supporting points of the pressure plate 513 by the plurality of guide bars 516 is widened in the up-down direction. Accordingly, when viewed in the lateral direction, an inclination of the pressure plate 513 can be suppressed, and thus, straightness of the pressure plate 513 can be improved.

In addition, although it is not shown, when viewed in the up-down direction, the ball screw mechanism 514 may be disposed between the plurality of guide bars 516. When viewed in the up-down direction, the guide bars 516 are positioned outside the ball screw mechanism 514, and thus, a gap in the lateral direction between the guide bars 516 is widened. Accordingly, a gap between supporting points of the pressure plate 513 by the plurality of guide bars 516 is widened in the lateral direction. Accordingly, when viewed in the up-down direction, an inclination of the pressure plate 513 can be suppressed, and thus, straightness of the pressure plate 513 can be improved. In addition, as described above, in order to dispose the ball screw mechanism 514 as close as possible to the center line of the plunger 512 as described above, preferably, the guide bars 516 may be positioned outside the ball screw mechanism 514.

An injection frame 563 includes the injection support 515, the guide bars 516, the guide bar support 517, and the base 518. The injection frame 563 is disposed in front of the extrusion frame 562.

In order to prevent collision between the plasticizing cylinder 551 and the injection motor 519 when the extrusion frame 562 rotates, the injection motor 519 may be attached to a side surface of the pressure plate 513. The injection motor 519 may be attached to an upper surface of the pressure plate 513. However, inthiscase, in order to prevent the collision between the pressure plate 513 and the injection motor 519, a position of the plasticizing cylinder 551 is high, and thus, there is a concern that a size of the injection unit 500 increases.

If the injection motor 519 is driven and the plunger 512 is moved forward, the inside of the mold unit is filled with the molding material accumulated in front of the plunger 512 from the nozzle provided in a front end portion of the injection cylinder 511.

Both the injection cylinder 511 and the ball screw mechanism 514 may be attached to the injection support 515. The injection support 515 includes a refrigerant flow path (not shown) which is a heat insulating portion for blocking heat transfer between the injection cylinder 511 and the ball screw mechanism 514. The refrigerant flow path is provided in a middle of the heat transfer path and suppresses an increase in a temperature of the ball screw mechanism 514. By suppressing the increase in the temperature, it is possible to prevent the lubricant from flowing out from the ball screw mechanism 514 via a clearance caused by a difference in thermal deformation between the ball screw shaft 514a and the ball screw nut 514b. In addition, it is possible to suppress a dimensional change of a component of the ball screw mechanism 514. Accordingly, a smooth operation of the ball screw mechanism 514 is realized, and thus, it is possible to decrease an amount of the used lubricant. Moreover, as described above, in the case where the ball screw mechanism 514 is disposed as close as possible to the center line of the plunger 512, a heat transfer path between the ball screw mechanism 514 and the injection cylinder 511 is shortened, and thus, excellent heat insulation properties are exerted by the refrigerant flow path in the middle of the heat transfer path. In addition, a cooling unit (not shown) is connected to the refrigerant flow path.

The cooling unit is controlled by the controller 700 so as to supply a refrigerant to the refrigerant flow path. The refrigerant includes a liquid such as water or a gas such as air. For example, the cooling unit includes a heat exchanger, a pump, or the like, and a refrigerant may circulate between the heat exchanger and the refrigerant flow path. In addition, the cooling unit may not include the heat exchanger, and the refrigerant warmed in the refrigerant flow path may be discarded.

The controller 700 causes the temperature sensor to monitor at least one of the temperature of the ball screw mechanism 514, the temperature of the injection cylinder 511, and the temperature of the injection support 515, and controls the cooling unit based on measurement results of the temperature sensor. In addition, a flow rate of the refrigerant supplied from the cooling unit, a temperature of the refrigerant, or the like is controlled by the controller 700. The flow rate of the refrigerant or the temperature of the refrigerant can be adjusted such that the temperature of the injection support 515 is within a predetermined range, overcooling of the injection support 515 is restricted by this control, and it is possible to improve heating efficiency of the injection cylinder 511.

Moreover, in a case where the temperature of the injection support 515 exceeds an upper limit temperature, an alarm unit (not shown) can be operated by the controller 700, and thus, it is possible to restrict heating of the injection cylinder 511. In addition, in a case where the temperature of the injection support 515 is below a lower limit temperature, the alarm unit can be operated by the controller 700, and thus, it is possible to restrict the cooling of the injection support 515.

In addition, the cooling unit for the extrusion unit 510 and the cooling unit for the plasticizing unit 550 maybe separately provided, or a common cooling unit may be used.

### (Switching Valve)

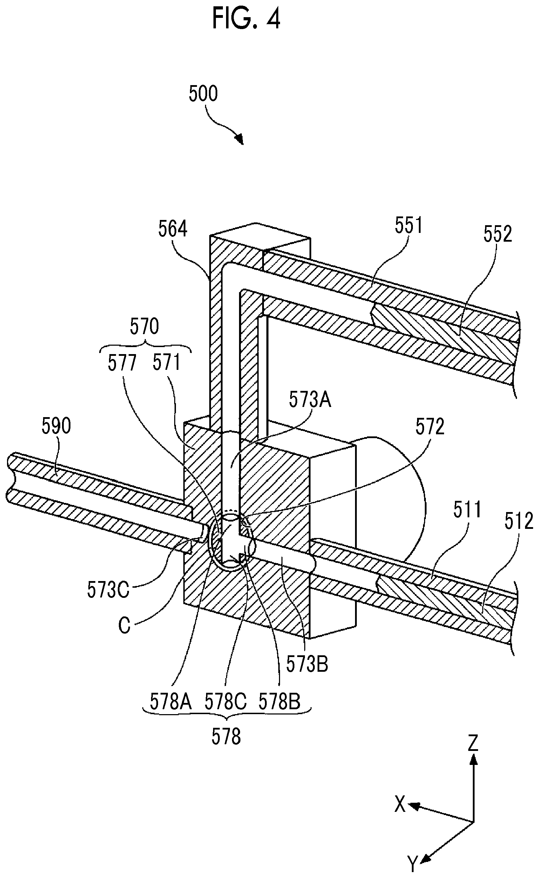

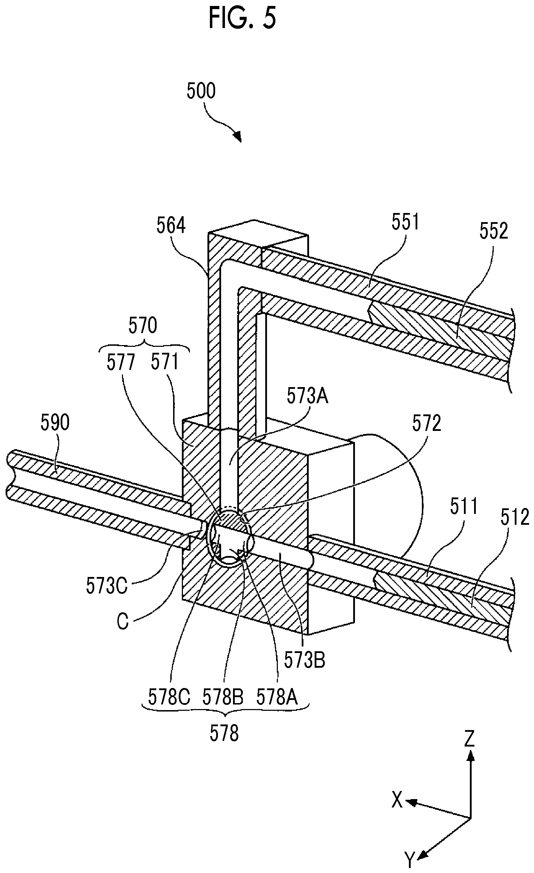

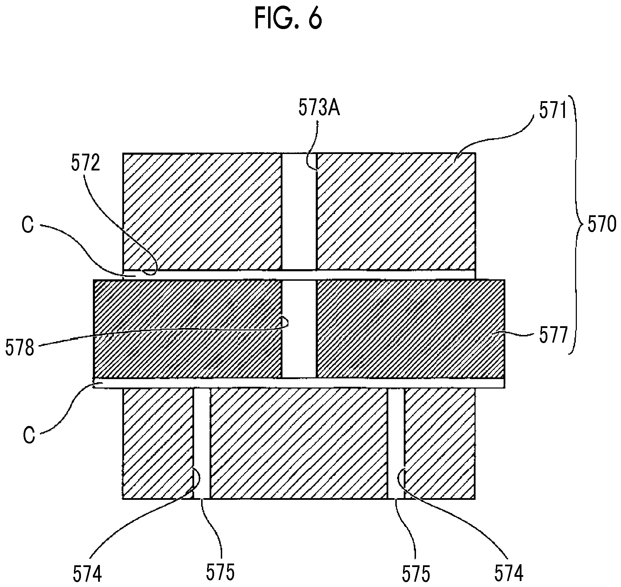

Next, a configuration and a function of the switching valve 570 constituting the preplasticizing type injection unit 500 will be described with reference to Figs. 4 to 6. Figs. 4 and 5 respectively show a first state and a second state of a valve body of the switching valve constituting the injection unit, and sectional views perpendicular to a rotation center line of a valve body 577. In addition, Fig. 6 is a sectional view when the switching valve is cut in a direction perpendicular to Figs. 4 and 5, and is a sectional view when cut in a direction along an axial direction of a columnar valve body.

As shown in Figs. 4 and 5, the plasticizing cylinder 551, the injection cylinder 511, and the nozzle 590 which are provided in the injection unit 500 communicate with the switching valve 570 which switches a flow direction of the molding material. In addition, the descriptions of the configurations and operations of the plasticizing cylinder 551 and the screw 552 which is movable forward or rearward and rotatable inside the plasticizing cylinder 551 are as described above. Moreover, the descriptions of the configurations and operations of the injection cylinder 511 and the plunger 512 which is movable forward or rearward and rotatable inside the injection cylinder 511 are as described above.

The nozzle 590 injects the molding material supplied from the switching valve 570 to the mold unit 800 shown in Figs. 1 and 2. The liquid molding material filling the inside of the mold unit 800 is solidified, and thus, the molding product is molded.

The switching valve 570 includes a valve box 571 and the columnar valve body 577 which is disposed so as to be rotatable inside the valve box 571, for example.

The valve box 571 includes a hollow portion 572 in which the valve body 577 is disposed, a plasticizing cylinder connection port 573A which communicates with the hollow portion 572, an injection cylinder connection port 573B which communicates with the hollow portion 572, and a nozzle connection port 573C which communicates with the hollow portion 572. The plasticizing cylinder connection port 573A communicates with the plasticizing cylinder 551 and the inside of the connection pipe 564. The injection cylinder connection port 573B communicates the inside of the injection cylinder 511. The nozzle connection port 573C communicates with the inside of the nozzle 590.

As shown in Figs. 4 and 5, a sectional shape of the hollow portion 572 is circular and a sectional shape of the columnar valve body 577 provided in the hollow portion 572 is circular in a cross section (a cross section along Z direction in the drawings) perpendicular to an axial direction (Y direction in the drawings) of the hollow portion 572. A diameter of the cross section of the valve body 577 is set to be slightly smaller than a diameter of the cross section of the hollow portion 572, a clearance C is formed between a wall surface of the hollow portion 572 and an outer peripheral surface of the valve body 577, and thus, it is possible to rotate the valve body 577 in the valve box 571.

As shown in Fig. 6, the valve box 571 further includes resin discharge flow paths 574 which communicate with the hollow portion 572. The hollow portion 572 has a cylindrical shape and two resin discharge flow paths 574 are provided with a gap at positions deviated from the plasticizing cylinder connection port 573A in the axial direction of the hollow portion 572. In addition, resin outlets 575 are formed at positions of the resin discharge flow paths 574 facing an outer peripheral surface (lower surface) of the valve box 571. In addition, the number or the installation positions of the resin discharge flow paths 574 are not limited to the shown example.

The resin discharge flow paths 574 communicate with the hollow portion 572, the resin outlets 575 are formed at positions of the resin discharge flow paths 574 facing the outer peripheral surface of the valve box 571, and thus, a resin which has flowed from the plasticizing cylinder 551 or the injection cylinder 511 to the clearance C can be discharged to the outside of the valve box 571.

For example, the injection cylinder connection port 573B and the nozzle connection port 573C are provided on sides opposite each other in a state where the rotation center line of the valve body 577 is interposed therebetween. Meanwhile, for example, the plasticizing cylinder connection port 573A is provided at substantially the same distance from the injection cylinder connection port 573B and the nozzle connection port 573C along the outer periphery of the valve body 577. That is, the injection cylinder connection port 573B, the plasticizing cylinder connection port 573A, and the nozzle connection port 573C are disposed at a pitch of 90° in this order in a predetermined direction (the counterclockwise direction in Figs. 4 and 5) about the rotation center line of the valve body 577. In this way, the switching valve 570 having the shown valve body 577 constitutes a three-way switching valve.

The resin discharge flow paths 574 extend vertically downward from the hollow portion 572 so that the resin existing the clearance C between the hollow portion 572 and the valve body 577 can be naturally discharged to the outside of the valve box 571. In addition to the aspect extending vertically downward, an axis aspect of each resin discharge flow path 574 includes various axis aspects such as an aspect extending vertically obliquely downward or a combination of an aspect extending vertically obliquely downward and an aspect extending vertically downward.

The valve body 577 rotates in the hollow portion 572 of the valve box 571, and thus, the valve body 577 can be switched to the first state shown in Fig. 4 and the second state shown in Fig. 5.

As shown in Figs. 4 and 5, the valve body 577 has a substantially T-shaped flow path 578. The flow path 578 includes a first hole 578A, a second hole 578B, and a third hole 578C which are disposed at a pitch of 90° in a predetermined direction (the clockwise direction in Figs. 4 and 5) about the rotation center line of the valve body 577.

As shown in Fig. 4, when the valve body 577 is in the first state, in the valve body 577, the first hole 578A faces and communicates with the plasticizing cylinder connection port 573A and the second hole 578B faces and communicates with the injection cylinder connection port 573B. That is, the first hole 578A and the second hole 578B of the flow path 578 of the valve body 577 form a first flow path through which the plasticizing cylinder connection port 573A and the injection cylinder connection port 573B communicate with each other.

In addition, as shown in Fig. 5, when the valve body 577 is in the second state, in the valve body 577, the first hole 578A faces and communicates with the injection cylinder connection port 573B and the third hole 578C faces and communicates with the nozzle connection port 573C. That is, the first hole 578A and the third hole 578C of the flow path 578 of the valve body 577 form a second flow path through which the injection cylinder connection port 573B and the nozzle connection port 573C communicate with each other. In addition, in Figs. 4 and 5, in the columnar valve body 577, the disposition positions (the positions in the cross section of the valve body 577) of the flow path 578 and the resin discharge flow path 574 are the same as each other, but both may be different from each other. For example, in the columnar valve body 577, a plurality of (for example, two) resin discharge flow paths 574 are formed with predetermined gaps in the axial direction from the flow path 578.

The switching valve 570 shown in Figs. 4 and 5 is a switching valve which is generally applied to the preplasticizing type injection unit 500. In addition, the switching valve 570 having the shown valve body 577 is the three-way switching valve in which the valve body 577 is rotatably disposed in the valve box 571. However, the switching valve may be switching valves having other aspects. For example, a switching valve may be provided, which includes a first valve body having a linear flow path including the first hole 578A and the third hole 578C and a second valve body having a L-shaped flow path including the first hole 578A and the second hole 578B in the hollow portion of the valve box. In the switching valve having this aspect, for example, in the cylindrical hollow portion, the first valve body and the second valve body are disposed to be slidable, and when the switching valve is in the first state shown in Fig. 4, the second valve body communicates with the plasticizing cylinder connection port 573A and the injection cylinder connection port 573B. In addition, when the switching valve is in the second state shown in Fig. 5, the switching valve is switched to the second valve body, and thus, the first valve body communicates with the injection cylinder connection port 573B and the nozzle connection port 573C. In this way, the plurality of valve bodies slide in the hollow portion of the valve box, the switching valve of switching the direction of the flow path is included as another aspect of the switching valve 570 constituting the preplasticizing type injection unit 500.

In addition, a temperature sensor such as a thermocouple (not shown) or a heating unit such as a heater (not shown) is housed at a predetermined position of the valve box 571. A measurement signal measured by the temperature sensor is transmitted to the controller 700, and the heating unit is controlled by the controller 700 such that a temperature of the resin flow path of the plasticizing cylinder connection port 573A, the injection cylinder connection port 573B, or the like becomes a predetermined temperature, for example, a glass transition temperature or a melting temperature of the resin.

In this way, with respect to the general switching valve 570 in which the valve body 577 is rotatably or slidably disposed in the valve box 571, for example, a switching valve according to an embodiment of the present invention having a resin removal portion for removing the resin which has flowed to the outer peripheral surface of the valve box 571 via the resin discharge flow path 574 will be described below.

### (Molding Cycle in Preplasticizing Type Injection Unit)

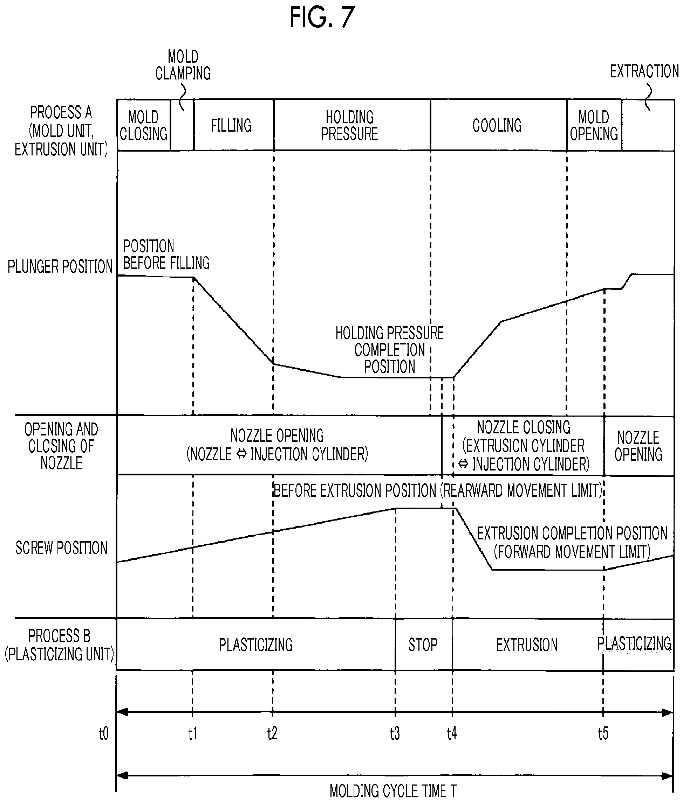

Next, a molding cycle in a preplasticizing type injection unit will be described with reference to Fig. 7. Fig. 7 is an example of a sequence diagram of the molding cycle in the preplasticizing type injection unit.

In the sequence diagram shown in Fig. 7, a process associated with the mold unit 800 and the extrusion unit 510 is shown in an upper stage (a process A in the drawing) together with a plunger position and a process associated with the plasticizing unit 550 is shown in a lower stage (a process B in the drawing) together with a screw position. In addition, opening and closing of the nozzle 590 are shown in an intermediate stage. Here, as shown in Fig. 5, the opening of the nozzle indicates a state where the injection cylinder 511 and the nozzle 590 communicate with each other and the resin fills the inside of the mold unit 800 via the nozzle 590 or a state where the injection cylinder 511 and the nozzle 590 communicate with each other and the resin can fill the inside of the mold unit 800 via the nozzle 590. Meanwhile, as shown in Fig. 4, the closing of the nozzle indicates a state where the plasticizing cylinder 551 and the injection cylinder 511 communicate with each other and the resin cannot fill the inside of the mold unit 800 via the nozzle 590.

In Fig. 7, a molding cycle time required for the molding cycle is T, and a predetermined number of molding products are molded by repeating the molding cycle a predetermined number of time. In the mold unit, one or a plurality of molding products are molded at a time.

In the process A, the mold closing process, the mold clamping process, the holding pressure process, the cooling process, the mold opening process, and an extraction process (ejection process) are performed in this order. Meanwhile, in the process B, the plasticizing process and an extrusion process are performed in this order.

An end time of the filling process is t2, an end time of the plasticizing process is t3, an end time (extrusion start time) of a stop process is t4, and an end time of the extrusion process is t5. In addition, the mold clamping process is continuously performed until the mold opening process starts.

The state where the nozzle is closed is maintained from a midway time of the cooling process to the end time t5 of the extrusion process, and the state where the nozzle is open is maintained in other times.

A mold closing control, a mold opening control, and an extraction control in the mold unit 800, a filling control or a holding pressure control of the plunger 512 in the extrusion unit 510, a switching control of the switching valve 570, a plasticizing control, a stop control, and an extrusion control of the screw 552 in the plasticizing unit 550 are performed by the controller 700. That is, for example, a sequence shown in Fig. 7 is stored in the recording medium 702 of the controller 700, and each unit is controlled concurrently or permutely according to this sequence. In addition, the sequence shown in Fig. 7 is merely an example, and various sequences may exist depending on the molding cycle time T, the preplasticizing type injection unit to be used, a type of injection molding machine having this injection unit, or the like. For example, in a latter part of the plasticizing process, there may be a deceleration step of the screw 552.

At a time t0, the nozzle 590 is open. The mold unit 800 is in the mold closing process, and in the extrusion unit 510, the plunger 512 in the injection cylinder 511 is on standby at a position before filling (a position at which the plunger 512 moves most rearward). That is, in this state, a portion from the nozzle 590 to a front space of the plunger 512 in the injection cylinder 511 is filled with the molding material. Meanwhile, at the time t0, the plasticizing unit 550 is in the plasticizing process. In addition, this plasticizing process starts simultaneously with the end of the extrusion process in a previous molding cycle (time t5 of the previous molding cycle) and continues from this start time.

In the process A, in the mold unit 800, the mold clamping process is performed following the mold closing process in the mold unit 800, and the mold clamping process is continuously performed until the mold opening process starts. In the mold clamping process, the mold clamping motor 160 is driven such that the crosshead 151 moves forward from the mold closing completion position to the mold clamping position, and thus, the mold clamping force is generated. When the mold is clamped, a cavity space 801 is formed between the movable mold 820 and the stationary mold 810.

In the mold unit 800 and the extrusion unit 510, the filling process starts at the time t1, a forward movement control of the plunger 511 is controlled by the controller 700, and the inside of the mold unit 800 is filled with the molding material via the nozzle 590. In the filling process, the injection motor 519 is driven such that the plunger 512 moves forward at a set speed, the liquid molding material accumulated in front of the plunger 512 fills the cavity space 801 in the mold unit 800 via the switching valve 570 and the nozzle 590. For example, a position or a speed of the plunger 512 is detected using an encoder mounted on the injection motor 519. The encoder detects the rotation of the injection motor 519 and transmits a signal indicating a detection result to the controller 700. If the position of the plunger 512 reaches a set position, the filling process is switched to the holding pressure process.

In the process A, the filling process is transferred to the holding pressure process at the time t2. However, the plunger 512 continuously holds the molding material in front of the plunger 512 at a set holding pressure, the plunger 512 slightly moves forward, and thus, the holing pressure is completed. A position at which the holding pressure is completed is a holding pressure completion position. For example, the holding pressure is detected using a pressure detector, the pressure detector transmits a measurement signal to the controller 700, and a control is performed to continue the holding pressure by the controller 700.

The plunger 512 continues to hold the molding material by the holding pressure, and in the process A, after the holding pressure process is completed, the process is transferred to the cooling process. When the holding pressure process is completed, an inlet of the cavity space 801 is closed by a solidified molding material. This state is referred to as a gate seal, and backflow of the molding material from the cavity space 801 is prevented. In the cooling process, the molding material in the cavity space 801 is cooled, and the solidification of the molding material progresses . Until the time t4 in the cooling process of the process A, the plunger 512 stops at the holding pressure completion position. At the time t5, the rearward movement of the plunger 512 is temporarily stopped to hold the position of the plunger 512, and thereafter, the plunger 512 is moved rearward toward the position before filling.

Meanwhile, in the process B, the plasticizing process is performed until the midway time t3 of the holding pressure process in the process A. In the plasticizing process, the plasticizing motor 560 is driven such that the screw 552 rotates, and thus, the molding material is fed forward along the spiral grooves formed no the screw 552. The molding material is gradually melted while moving forward in the plasticizing cylinder 551. As the liquid molding material is fed to a portion in front of the screw 552 and is accumulated in front of the plasticizing cylinder 551, the screw 552 move rearward and reaches a position before extrusion which is a rearward movement limit at the time t3.

In the plasticizing process, in order to restrict the abrupt rearward movement of the screw 552, the set back pressure may be applied to the screw 552. For example, the back pressure with respect to the screw 552 is detected using a pressure detector. The pressure detector transmits a signal indicating a detection result to the controller 700. The screw 552 moves rearward to a position before injection (a plasticizing completion position), a predetermined amount of molding material is accumulated in front of the screw 552, and thus, the plasticizing process is completed.

In the process B, the position of the screw 55 is held at the position before extrusion from the time t3 to the time t4. In addition, in this case, the screw 552 may rotate or may not rotate. The extrusion process starts at the time t4. In the extrusion process, the extrusion motor 559 is driven such that the screw 552 moves forward, and the molding material accumulated in front of the screw 552 is supplied from the plasticizing cylinder 551 to the injection cylinder 511 via the switching valve 570. In the extrusion process, after the screw 552 moves forward to an extrusion completion position which is a forward movement limit, the screw 552 continuously rotates to the time t5 at which the plasticizing process for the next molding cycle starts at the extrusion completion position. The molding material in the plasticizing cylinder 551 is fed to the inside of the injection cylinder 511 by the rotation of the screw 552.

In the process A, after the time t4, as the molding material is accumulated in front of the plunger 512, the plunger 512 moves rearward in the injection cylinder 511. In the process A, the process is transferred to the mold opening process following the cooling process, and the mold opening of the mold unit 800 is performed. In the mold opening process, the mold clamping motor 160 is driven such that the crosshead 151 moves rearward to the mold opening completion position at the set speed, and thus, the movable platen 120 moves rearward, and the movable mold 820 is separated from the stationary mold 810. Thereafter, the process is transferred to the extraction process, and the ejector unit 200 ejects the molding product, which is molded in the mold unit 800, from the movable mold 820.

In the process B, the process is transferred from the extrusion process to the plasticizing process during the mold opening process in the process A. The extrusion process is completed at the time t5. After a predetermined time elapses from the time t5, in the process A, the plunger 512 moves rearward (suck back). For example, the suck back may be performed when a confirmation signal when the nozzle opening is turned on. For example, a sensor capable of detecting the rotation position of the valve body 577 of the switching valve 570 is provided, and the nozzle opening or the nozzle closing can be determined at the detected rotation position of the valve body 577.

In this way, in the injection molding machine having the preplasticizing type injection unit 500, the operations of respective units constituting the mold unit 800, the extrusion unit 510 constituting the injection unit 500, and the plasticizing unit 550 constituting the injection unit 500 are concurrently or permutely.

In addition, in the preplasticizing type injection unit 500, the screw 512 can continuously rotate over the entire molding cycle time T or approximately 90% of the molding cycle time T. Meanwhile, a rotation time of the screw in the inline type injection unit is approximately half of the molding cycle time T.

Accordingly, compared to the screw in the inline type injection unit, the rotation time of the screw 512 can be secured approximately twice. Accordingly, in a case where the same molding cycle time T is given, compared the inline type injection unit, in the preplasticizing type injection unit, a diameter of the screw 512 can be decrease approximately 1/2, and thus, the size of the screw 512 can decrease. In addition, from another viewpoint, a required discharge amount of the screw 512 can decrease approximately 1/2, and thus, a motor capacity of the extrusion motor 559 can decrease. In addition, for example, in the preplasticizing type injection unit 500, the plasticizing of the molding material can be performed during the filling process or the holding pressure process, which cannot be performed in the inline injection unit.

### [Injection Unit According to First Embodiment]

Next, an injection unit according to a first embodiment of the present invention will be described with reference to Fig. 8. Fig. 8 is an exterior perspective view of the injection unit according to the first embodiment, and is an enlarged view of a periphery of the switching valve 570. A preplasticizing type injection unit 600 according to the first embodiment shown in Fig. 8 includes heating units 610 which are resin removal portions on a pair of facing side surfaces 571a, into which the columnar valve body 577 is inserted and rotatably locked, of the valve box 571 constituting the switching valve 570. In addition, the heating unit 610 which is the resin removal portion is also provided on a lower surface 571b of the valve box 571. In addition, the switching valve 570 of the shown example has the aspect in which the columnar valve body 577 is rotatably disposed in the hollow portion 572 of the valve box 571. However, for example, the switching valve 570 may have an aspect in which two valve bodies are slidably disposed in the hollow portion.

In the valve box 571, the cylindrical hollow portion 572 extending in the Y direction in the drawing is formed so as to penetrate the pair of facing side surfaces 571a. The columnar valve body 577 having a diameter smaller than that of the hollow portion 572 is rotatably inserted into the hollow portion 572, and is engaged to protrude outward from the side surfaces 571a. In addition, as shown in Figs. 4 and 5, the plasticizing cylinder connection port 573A, the injection cylinder connection port 573B, and the nozzle connection port 573C are formed in the valve box 571, and communicate with the hollow portion 572.

The valve box 571 further includes the resin discharge flow paths 574 which communicate with the hollow portion 572. Specifically, two resin discharge flow paths 574 extending downward in a vertical direction (Z direction in the drawing) are provided at positions with a gap in an axial direction (Y direction in the drawing) with respect to the cylindrical hollow portion 572. Moreover, the valve box 571 may have one resin discharge flow path 574 or three or more resin discharge flow paths 574 communicating with the hollow portion 572.

A pressurized resin exists in the plasticizing cylinder connection port 573A, the injection cylinder connection port 573B, or the nozzle connection port 573C of the valve box 571, and a new resin is supplied as needed from the plasticizing cylinder 551 or the injection cylinder 511 in the molding cycle . Meanwhile, a diameter of a cross section of the valve body 577 is set to be slightly smaller than that of the hollow portion 572, and thus, the clearance C is formed between the wall surface of the hollow portion 572 and the outer peripheral surface of the valve body 577.

A discharge aspect of the resin to the outside of the valve box 571 includes a discharge (y1 direction in the drawing) from the clearance C facing the side surface 571a which is one of the outer peripheral surfaces of the valve box 571 or a discharge (y2 direction in the drawing) from the resin outlet 575 facing the lower surface 571b which is one of the outer peripheral surfaces of the valve box 571. That is, the resin discharge flow path 574 communicates with the hollow portion 572 and the resin outlet 575. The temperature sensor such as the thermocouple (not shown) or the heating unit such as the heater (not shown) is housed in the valve box 571. The measurement signal measured by the temperature sensor is transmitted to the controller 700, and the heating unit is controlled by the controller 700 such that a temperature of the resin flow path of the plasticizing cylinder connection port 573A, the injection cylinder connection port 573B, or the like becomes a predetermined temperature, for example, a glass transition temperature or a melting temperature of the resin.

The resin discharged from the clearance C facing the side surface 571a of the valve box 571 or the resin discharged from the resin outlets 575 facing the lower surface 571b of the valve box 571 via the resin discharge flow paths 574 communicating with the clearance C comes into contact with the outside air to be cooled, and thus, is fixed to the outer peripheral surface such as the side surface 571a or the lower surface 571b. In this way, in a case where the resin is fixed to the outer peripheral surfaces of the valve box 571, the discharged resin is further supplied to a portion inside the fixed resin, the fixed resin is grown, and a volume is likely to increase. In addition, the grown resin comes into contact with the heater (not shown) or the like mounted on the periphery of the injection cylinder 511, which causes smoking, carbonization, short circuit of the heater, or the like.

In addition, in the injection cylinder 511, the heating units 610 such as heaters are provided on the outer peripheral surfaces of the valve box 571, specifically, the side surfaces 571a and the lower surface 571b from which the resin is discharged. In addition, the heating unit 610 of the shown example is provided on the side surface 571a which faces the side surface 571a having the heating unit 610 visible in the drawing and is positioned on a side opposite to the side surface 571a, and the resin discharged from the clearance C can be melted by the heating unit 610.

Moreover, in addition to the aspect in which the heating units 610 are mounted on both the side surfaces 571a and the lower surface 571b of the valve box 571 as the shown example, an aspect in which the heating unit 610 is mounted on only the lower surface 571b may be adopted. That is, the heating unit 610 which is the resin removal portion may be mounted at "a position corresponding to at least the resin outlet 575". Here, the position corresponding to the resin outlet 575 includes a position around the resin outlet 575 inside the valve box 571 in addition to the position around the resin outlet 575 on the lower surface 571b which is the outer peripheral surface of the valve box 571.

A specific aspect of the heating unit 610 is not limited as long as it is a unit which can provide a temperature at which the resin can be melted to the resin discharged to the outside. The periphery of the clearance C facing the side surface 571a of the valve box 571 or the periphery of the resin outlet 575 including the resin outlet 575 on the lower surface 571b of the valve box 571 is heated to the temperature at which the resin is melted by the heating unit 610.

The heating unit 610 may be operated over the entire period of the molding cycle, and the periphery of the clearance C facing the side surface 571a or the peripheries of the resin discharge flow paths 574 and the resin outlet 575 may be heated continuously. In addition, the heating unit 610 may be operated at a stage at which a predetermined molding cycle ends, the heating may continue during a predetermined time, and thereafter, the controller 700 may perform the control for stopping the operation of the heating unit 610. In addition, in a case where the resin flows or when the valve body 577 is operated, the heating unit 610 may not be operated. Here, the case where the resin flows includes the filling process, the holding pressure process, the extrusion process, or the like. In addition, when the pressure of the molding material in the switching valve 570 is a predetermined value or more, the heating unit 610 may not be operated. In this way, the operation aspects of the heating unit 610 are various. However, in the operation aspects, it is preferable that the heating unit 610 is operated at all times. When the heating unit 610 is operated at all times, a temperature of the switching valve 570 is not changed, and molding stability is improved.

By the heating of the heating unit 610, the resin discharged from the clearance C facing the side surface 571a or the resin discharged from the resin outlet 575 via the resin discharge flow path 574 communicating with the clearance C is discharged so as to drop downward vertically without being fixed to the outer peripheral surface of the valve box 571. In addition, a resin recovery unit which accommodates the dropped resin is provided at a position below the switching valve 570.

In this way, it is possible to remove the resin discharged from the resin outlet 575 or the like on the outer peripheral surface of the valve box 571 by the heating unit 610. Here, the "removal" of the resin includes heating the resin temporarily fixed to the outer peripheral surface, melting the resin such that the resin drops, and discharging the resin, in addition to discharging the resin discharged from the resin outlet 575 or the like so as to drop the resin while maintaining the melted state of the resin and discharging the resin without fixing the resin to the outer peripheral surface.

The shown heating unit 610 has the aspect in which the heating unit 610 is attached to the outer peripheral surface of the valve box 571. However, the heating unit 610 may have an aspect in which the heating unit 610 is attached to a periphery of the clearance C facing the side surface 571a or an aspect in which the heating unit 610 is housed in a periphery of the resin outlet 575 inside the valve box 571.

In addition, as described above, the heating unit which is housed in the periphery of the flow path of the plasticizing cylinder connection port 573A or the like in advance may be used so as to heat the periphery of the resin outlet 575 or the like. However, in a case where a distance between the periphery of the flow path of the plasticizing cylinder connection port 573A or the like and the periphery of the resin outlet 575 of the resin discharge flow path 574 facing the outer peripheral surface is long, inherently, if the periphery of the resin outlet 575 is heated using the heating unit for heating the flow path of the plasticizing cylinder connection port 573A or the like, a very high heating temperature may be required. In addition, in a case where a too high heating temperature is generated, the valve box 571 may be excessively heated too much. Accordingly, as the shown example, in addition to the heating unit which is housed in the periphery of the flow path of the plasticizing cylinder connection port 573A or the like in advance, a dedicated heating unit 610 for heating the periphery of the resin outlet 575 or the like may be mounted.

Here, a heating temperature by the heating unit 610 will be described. The used molding material includes a crystalline resin (crystalline plastic) and an amorphous resin (amorphous plastic). The crystalline resin has a melting point and the amorphous resin has a glass transition point. In addition, although the crystalline resin has a glass transition point in addition to the melting point, as the heating temperature applied when the resin is melted, here, the heating temperature is set to a temperature equal to or higher than the melting point in a case the molding material is the crystalline resin, and the heating temperature is set to a temperature equal to or higher than the glass transition point in a case where the molding material is the amorphous resin.

The crystalline resin include polyethylene terephthalate (PET), polybutylene terephthalate (PBT), polyethylene (PE), polypropylene (PP), polyamide6 (PA6), polyamide66 (PA66), polyacetal (POM), or the like.

The melting points of the respective resins are as follows . That is, PET is approximately 260°C, PBT is approximately 230°C to 270°C, a low density PE of PE is approximately 95°C to 130°C, a high density PE of PE is approximately 120°C to 140°C, PP is approximately 170°C, PA6 is approximately 230°C, PA66 is approximately 270°C, and POM is approximately 180°C.

Meanwhile, the amorphous resin include polystyrene (PS), polyvinyl chloride (PVC), ABS resin, methacrylic resin (PMMA), or the like.

The glass transition points of the respective resins are as follows. PS is approximately 90°C, PVC is approximately 80°C, ABS resin is approximately 70°C, and PMMA is approximately 100°C.

### [Injection Unit According to Second Embodiment]

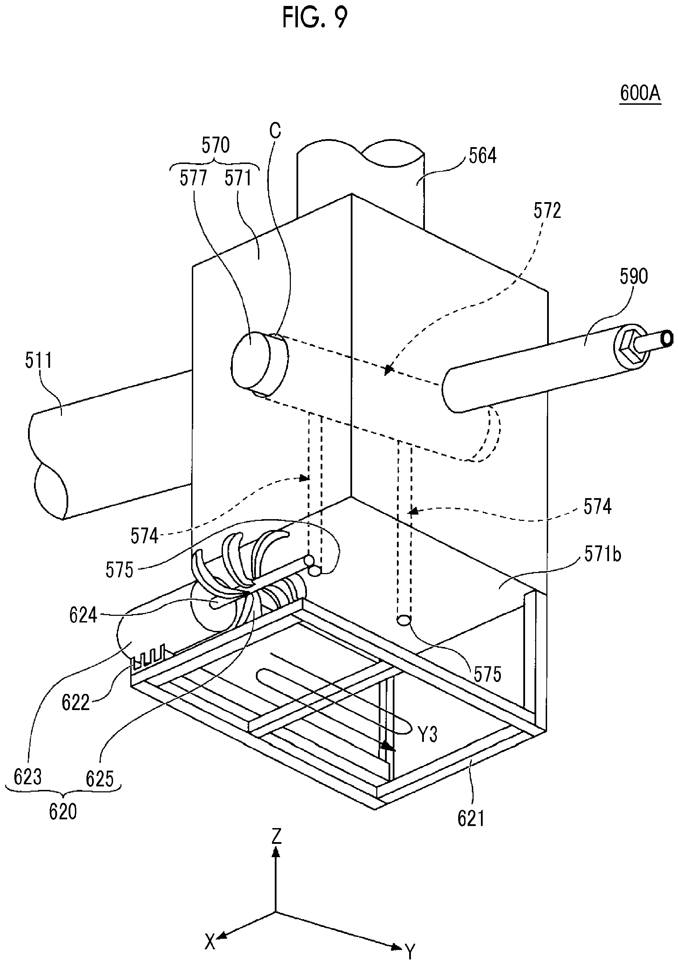

Next, an injection unit according to a second embodiment of the present invention will be described with reference to Fig. 9. Fig. 9 is an exterior perspective view of the injection unit according to the second embodiment, and is an enlarged view of the periphery of the switching valve 570. A preplasticizing type injection unit 600A according to the second embodiment shown in Fig. 9 includes a scraper 620, which is the resin removal portion, on the lower surface 571b of the valve box 571 constituting the switching valve 570. In addition, the shown example has an aspect in which the scraper 620 is mounted on only the lower surface 571b of the valve box 571. However, a similar scraper 620 may be mounted on the side surface 571a of the valve box 571.

For example, a frame structure 621 including a pair of L-shaped side-surface frames in a side view having a metal square pipe and a horizontal member which connects the pair of side-surface frames to each other is attached to the lower surface 571b of the valve box 571.

For example, in order to support the frame structure 621, a metal rail 622 on which a pair of wheels can travel is placed.

The scraper 620 includes a servo motor 623 and a plurality of blades 625 which are mounted on a periphery of a drive shaft 624. The blades 625 are mounted on the drive shaft 624 so as to come into slide contact with the lower surface 571b of the valve box 571.

The pair of wheels (not shown) is rotatably mounted below the servo motor 623, and the pair of wheels is fitted to the rail 622 so as to freely travel. The wheel is driven by electricity, and for example, interlocks with an operation switch provided in the controller 700. If the operation switch is turned on, the wheel is driven, and thus, the servo motor 623 can reciprocate both ends of the rail 622 (y3 direction in the drawing).

Moreover, if the operation switch is turned on, the servo motor 623 rotates the drive shaft 624 in addition to the driving of the wheel, and the plurality of blades 625 are rotated according to the rotation of the drive shaft 624. That is, the plurality blades 625 reciprocates a portion below the lower surface 571b of the valve box 571 in an axial direction of the hollow portion 572 while being rotated, and thus, the blades 625 continuously comes into slide contact with the periphery of the resin outlet 575.

Accordingly, in a case where the resin is fixed to the periphery of the resin outlet 575, the blades 625 continuously comes into slide contact with the periphery so as to scrape the fixed resin, and it is possible to remove the fixed resin from the outer peripheral surface of the valve box 571.

The operation of the above-described scraper 620 may be performed by turning on the operation switch at a stage when an administrator finishes molding of a day or at a stage when molding of a predetermined number of days is completed, or operation timing data may be input in the controller 700 and the operation switch may be automatically controlled to be turned on so as to be performed at the stage when the molding of the input predetermined number of days is completed.

Moreover, the scraper 620 is not limited to the aspect of the shown aspect, and includes various units capable of scraping and removing the resin fixed to the outer peripheral surface of the valve box 571. For example, a grid-shaped traveling rail may be directly installed on the lower surface 571b of the valve box 571, and the fixed resin may be cut and removed by a scraping blade moving along the traveling rail. In addition, a scraper may be configured by attaching a scraping blade to a piston rod constituting a cylinder mechanism, and this scraper may be attached to the lower surface 571b of the valve box 571. By operation the cylinder mechanism and reciprocating the piston rod, the scraping blade reciprocates around the resin outlet 575, and thus, the fixed resin can be removed.

### [Injection Unit According to Third Embodiment]

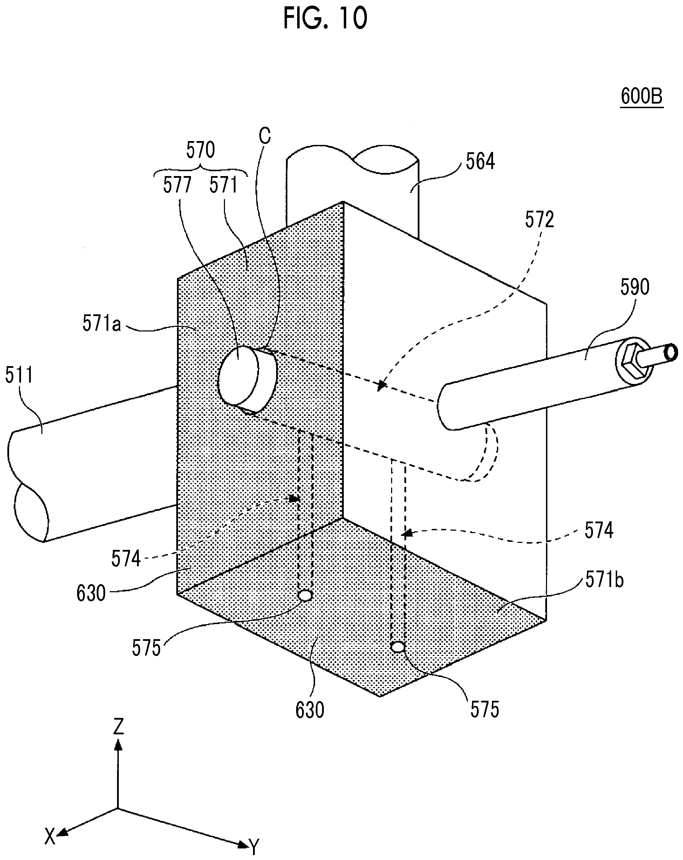

Next, an injection unit according to a third embodiment of the present invention will be described with reference to Fig. 10. Fig. 10 is an exterior perspective view of the injection unit according to the third embodiment, and is the enlarged view of a periphery of the switching valve 570. A preplasticizing type injection unit 600B according to the third embodiment shown in Fig. 10 includes coating layers 630, which are the resin removal portions, on the side surface 571a and the lower surface 571b of the valve box 571 constituting the switching valve 570. The coating layer 630 has releasability capable of easily peeling the resin.

In a case where the valve box 571 is formed of steel, nitriding treatment is performed on the surface of the valve box 571 in order to improve load bearing capability, and thus, nitride steel can be formed. The above-mentioned resin such as PET is easily fixed to the nitride steel.

Accordingly, the coating layer 630 having resin releasability is formed on the side surface 571a of the valve box 571 having the clearance C through which the resin leaks or the lower surface 571b of the valve box 571 having the resin outlet 575.

Here, the "coating layer" includes a coating layer by bonding a resin-releasable film to the outer peripheral surface of the valve box 571 or a coating layer by mounting a resin-releasable board on the outer peripheral surface of the valve box 571 in addition to a coating layer obtained by coating the outer peripheral surface of the valve box 571 in layers with the resin-releasable material.

A coating material having resin releasability includes a fluorine-based material, a nickel-plated material, or the like.

According to the injection unit 600B of the present embodiment, long-term fixing of the resin on the outer peripheral surface of the valve box 571 can be prevented only by forming the coating layer 630 having resin releasability on the surface of the valve box 571. That is, even if the resin temporarily is fixed to the outer peripheral surface of the valve box 571, when the resin grows to a certain size, the fixing resin is easily separated from the outer peripheral surface of the valve box 571 by its own weight and is removed.

In addition, other embodiments in which other components are combined with the configurations or the like described in the above embodiments may be adopted, and the present invention is not limited to the configurations described here. For example, in Fig. 3, the resin removal portions 610 and 620 may be attached to a support member 566 of the switching valve 570. In addition, the resin removal portion 610 and 620 may be provided between the resin outlet 575 and the injection cylinder 511. According to this embodiment, growth of the resin on the injection cylinder 511 side can be eliminated.

### Brief Description of the Reference Symbols

- 10:: injection molding machine
- 300, 500:: injection unit
- 510:: extrusion unit
- 511:: injection cylinder
- 512:: plunger
- 550:: plasticizing unit
- 551:: plasticizing cylinder
- 552:: screw
- 570:: switching valve
- 571:: valve box
- 571a:: side surface (outer peripheral surface)
- 571b:: lower surface (outer peripheral surface)
- 574:: resin discharge flow path
- 575:: resin outlet
- 577:: valve body
- 578:: flow path
- 590:: nozzle
- 600, 600A, 600B:: injection unit
- 610:: heating unit (resin removal portion)
- 620:: scraper (resin removal portion)
- 630:: coating layer (resin removal portion)
- 700:: controller
- C:: clearance

## Claims

1. An injection unit (600) comprising:
a plasticizing unit (550) which includes a plasticizing cylinder (551);
an extrusion unit (510) which includes an injection cylinder (511);
a nozzle (590); and
a switching valve (570) which performs switching a flow direction of a molding material among the plasticizing cylinder (551), the injection cylinder (511), and the nozzle (590),
wherein the switching valve (570) includes a valve box (571) having a hollow portion (572) and a valve body (577) which is rotatably or slidably disposed in the hollow portion (572),
wherein the hollow portion (572), a resin discharge flow path (574) which communicates with the hollow portion (572), and a resin outlet (575) through which the resin discharge flow path (574) faces an outer peripheral surface of the valve box (571) are formed in the valve box (571),
wherein a clearance (C) is formed between the wall surface of the hollow portion (572) and the outer peripheral surface of the valve body (577), and
the resin is discharged from the resin outlets (575) facing the lower surface (571b) of the valve box (571) via the resin discharge flow paths (574) communicating with the clearance (C), and
wherein a resin removal portion (610) which removes a resin discharged from the resin outlet (575) is provided at a position corresponding to at least the resin outlet (575).

2. The injection unit according to claim 1,
wherein the resin removal portion (610) is a heating unit (313) which heats the resin discharged from the resin outlet (575).

3. The injection unit according to claim 1,
wherein the resin removal portion (610) is a scraper (620) which scrapes a resin fixed to the outer peripheral surface.

4. The injection unit according to claim 1,
wherein the resin removal portion (610) is a coating layer (630) which is formed on the outer peripheral surface and the coating layer (630) has releasability with respect to a resin fixed to the outer peripheral surface.

## Patentansprüche

1. Einspritzeinheit (600), umfassend:
eine Plastifiziereinheit (550), die einen Plastifizierzylinder (551) umfasst,
eine Extrusionseinheit (510), die einen Einspritzzylinder (511) umfasst,
eine Düse (590) und
ein Schaltventil (570), welches das Umschalten einer Strömungsrichtung eines Formungsmaterials zwischen dem Plastifizierzylinder (551), dem Einspritzzylinder (511) und der Düse (590) durchführt,
wobei das Schaltventil (570) ein Ventilgehäuse (571), das einen hohlen Abschnitt (572) aufweist, und einen Ventilkörper (577), der drehbar oder verschiebbar in dem hohlen Abschnitt (572) angeordnet ist, umfasst,
wobei der hohle Abschnitt (572), ein Harzabgabe-Strömungsweg (574), der mit dem hohlen Abschnitt (572) in Verbindung steht, und ein Harzauslass (575), durch den der Harzabgabe-Strömungsweg (574) einer äußeren Umfangsfläche des Ventilgehäuses (571) zugewandt ist, in dem Ventilgehäuse (571) ausgebildet sind,
wobei ein Freiraum (C) zwischen der Wandfläche des hohlen Abschnitts (572) und der äußeren Umfangsfläche des Ventilkörpers (577) ausgebildet ist und
das Harz aus den Harzauslässen (575), die der unteren Fläche (571b) des Ventilgehäuses (571) zugewandt sind, via die Harzabgabe-Strömungswege (574), die mit dem Freiraum (C) in Verbindung stehen, abgegeben wird und wobei ein Harzentfernungsabschnitt (610), der ein aus dem Harzauslass (575) abgegebenes Harz entfernt, an einer Position bereitgestellt ist, die wenigstens dem Harzauslass (575) entspricht.

2. Einspritzeinheit nach Anspruch 1,
wobei der Harzentfernungsabschnitt (610) eine Heizeinheit (313) ist, die das aus dem Harzauslass (575) abgegebene Harz erhitzt.

3. Einspritzeinheit nach Anspruch 1,
wobei der Harzentfernungsabschnitt (610) ein Schaber (620) ist, der ein an der äußeren Umfangsfläche festgesetztes Harz abschabt.

4. Einspritzeinheit nach Anspruch 1,
wobei der Harzentfernungsabschnitt (610) eine Überzugsschicht (630) ist, die auf der äußeren Umfangsfläche ausgebildet ist, und die Überzugsschicht (630) eine Ablösbarkeit in Bezug auf ein an der äußeren Umfangsfläche festgesetztes Harz aufweist.

## Revendications

1. Une unité d'injection (600) comprenant :
une unité de plastification (550) qui comprend un cylindre de plastification (551) ;
une unité d'extrusion (510) qui comprend un cylindre d'injection (511) ;
une buse (590) ; et
une valve de commutation (570) qui réalise la commutation d'une direction d'écoulement d'un matériau de moulage parmi le cylindre de plastification (551), le cylindre d'injection (511) et la buse (590),
dans laquelle la valve de commutation (570) comprend un boîtier de valve (571) ayant une partie creuse (572) et un corps de valve (577) qui est disposé, de manière rotative ou coulissante, dans la partie creuse (572),
dans laquelle la partie creuse (572), une trajectoire d'écoulement de décharge de résine (574) qui communique avec la partie creuse (572) et une sortie de résine (575) à travers laquelle la trajectoire d'écoulement de décharge de résine (574) fait face à une surface périphérique externe du boîtier de valve (571), sont formées dans le boîtier de valve (571),
dans laquelle un jeu (C) est formé entre la surface de paroi de la partie creuse (572) et la surface périphérique externe du corps de valve (577), et
la résine est déchargée par les sorties de résine (575) faisant face à la surface inférieure (571b) du boîtier de valve (571) via les trajectoires d'écoulement de décharge de résine (574) communiquant avec le jeu (C), et
dans laquelle une partie de retrait de résine (610) qui retire une résine déchargée par la sortie de résine (575) est prévue dans une position correspondant au moins à la sortie de résine (575).

2. L'unité d'injection selon la revendication 1,
dans laquelle la partie de retrait de résine (610) est une unité chauffante (313) qui chauffe la résine déchargée par la sortie de résine (575).

3. L'unité d'injection selon la revendication 1,
dans laquelle la partie de retrait de résine (610) est un racloir (620) qui racle la résine fixée sur la surface périphérique externe.

4. L'unité d'injection selon la revendication 1,
dans laquelle la partie de retrait de résine (610) est une couche de revêtement (630) qui est formée sur la surface périphérique externe et la couche de revêtement (630) présente une aptitude au détachement par rapport à une résine fixée sur la surface périphérique externe.
